# EUROPÄISCHE PATENTSCHRIFT

(11) **EP 0 968 941 B1**
(45) Veröffentlichungstag und Bekanntmachung des Hinweises auf die Patenterteilung: **03.12.2003**
(21) Anmeldenummer: 99890222.5
(22) Anmeldetag: 02.07.1999
(51) Int. Cl.: B65G 51/06, B65D 47/08

(54) **Hülse für eine Rohrpostanlage**
Carrier for a pneumatic tube conveyor
Cartouche pour un tranporteur à tube pneumatique

(30) Priorität: 03.07.1998 AT 116498
(43) Veröffentlichungstag der Anmeldung: 05.01.2000
(73) Patentinhaber: Sumetzberger, Gerhard Ing., 1110 Wien (AT)
(72) Erfinder: Sumetzberger, Gerhard Ing., 1110 Wien (AT)
(74) Vertreter: Müllner, Erwin, Dr.

(56) Entgegenhaltungen:
- DE-A- 2 616 245
- DE-A- 3 139 791
- DE-A- 19 652 207
- US-A- 3 655 146
- US-A- 5 582 314
- US-A- 5 655 677

## Beschreibung

Die vorliegende Erfindung betrifft eine Hülse für eine Rohrpostanlage, bestehend aus einem zylindrischen Hülsenrohr, einem unteren Hülsenkopf und einem oberen Hülsenkopf, wobei der untere und der obere Hülsenkopf jeweils einen Gleitring aufweisen und wobei der obere Hülsenkopf einen Deckel aufweist, der um eine Achse, die am Rand der Hülse tangential, normal zur Längsachse der Hülse angeordnet ist, schwenkbar gelagert ist und der gegenüber der Achse einen Haken aufweist, welcher bei geschlossenem Deckel in eine Ausnehmung des oberen Hülsenkopfes eingreift, wobei der obere Hülsenkopf die Ausnehmung außen aufweist, der Haken in Richtung Verriegelungsstellung federbelastet ist und entgegen der Federkraft aus der Ausnehmung ausschwenkbar ist.

Solch eine Hülse ist z.B. aus der DE 196 52 207 A1, der DE 26 16 245 A oder der DE 31 39 791 A1 bekannt. Der obere Hülsenkopf ist offen, und an diesem ist ein Deckel angelenkt, der um eine Querachse drehbar ist. Er hat gegenüber der Achse eine radial einwärts federnde, axiale Zunge, die auf der Außenseite einen Schließhaken trägt, wobei dieser Schließhaken in eine Ausnehmung eingreifen kann, die an der Innenseite des oberen Hülsenkopfes vorgesehen ist. Die axiale Zunge besteht aus einem Abschnitt der Umfangswand und ist durch zwei vom Schließrand des Deckels ausgehende Schlitze begrenzt.

Es handelt sich also um eine Hülse, deren Deckel - bei senkrecht stehender Hülse - nach oben aufklappbar ist. Zu diesem Zweck drückt man auf die axiale Zunge, sodass der Schließhaken nach innen aus der Ausnehmung herausgedrückt wird, und drückt dann den Deckel nach oben.

Die US 3 655 146 A zeigt eine Hülse mit einer Verriegelung, bei der der Haken außen an der Hülse angebracht ist und der Deckel eine Öffnung aufweist, in die der Haken von innen eingreift.

In der US 5 582 314 A werden Behälterverschlüsse, z.B. für Flaschen beschrieben, wobei eine Nase eines Behälters einen flexiblen Hebel einer Kappe zurückhält.

Aus der US 5 636 947 A und der US 5 655 677 A ist bereits bekannt, dass es für Rohrpostanlagen von Spitälern und ähnlichen Einrichtungen wichtig ist, dass die Hülsen dicht verschließbar sind. In Spitälern werden nämlich oft Blutproben, Medikamente, Infusionslösungen und Ähnliches mit der Rohrpost transportiert. So werden z.B. mit Blutproben gefüllte Teströhrchen in eine entsprechend adaptierte Hülse eingesetzt und mit Klammern fixiert. Der Sinn der Fixierung besteht darin, einen Bruch der Röhrchen zu vermeiden. Wenn sie brechen (oder ein Verschlussstopfen aufgeht), rinnt der Inhalt in das Innere der Hülse, und von dort könnte er in das Rohr der Rohrpostanlage austreten, wenn die Hülse nicht dicht verschlossen ist. Dadurch können die Rohre der Rohrpostanlagen kontaminiert werden (z.B. mit Aids oder anderen Viren oder Bakterien), wodurch die Rohre Nährböden für Bakterien und Viren werden und alle weiteren Hülsen, die durch die Rohre transportiert werden, außen kontaminieren. Die Gefahr, dass dadurch Krankheiten rasch verbreitet werden, ist groß.

Hinzu kommt noch ein technisches Problem: die ausgetretenen Flüssigkeiten werden rasch zähflüssig und klebrig und behindern somit den leichten Durchgang der Hülsen durch die Rohre.

Wenn daher eine Flüssigkeit aus einer Hülse austritt, muss das Rohr sofort gereinigt und desinfiziert werden, was eine entsprechend lange Abschaltung der Rohrpostanlage in diesem Bereich nötig macht und entsprechende Wartungskosten mit sich bringt.

Diese Probleme können vermieden werden, wenn die Hülse dicht verschließbar ist. Wenn es in einer solchen Hülse zu einem Glasbruch kommt (oder ein Verschlussstopfen aufgeht, z.B. infolge der hohen Beschleunigungs- und Bremskräfte), dann bleibt die Flüssigkeit innerhalb der Hülse, und es ist nur notwendig, diese eine Hülse zu reinigen und zu desinfizieren.

Die in der US 5 636 947 A beschriebene dicht verschließbare Hülse ist in Längsrichtung zweigeteilt, und die beiden Teile sind über ein Scharnier, das parallel zur Längsachse der Hülse liegt, miteinander verbunden. Die Hülse lässt sich somit aufklappen, ohne dass ein eigener Deckel vorhanden ist.

Nachteilig dabei ist, dass eine derartige Hülse schwierig zu handhaben ist. Zum Beladen und Entladen des Gutes muss sie aus der Station herausgenommen und hingelegt werden. Im Gegensatz dazu können Hülsen der eingangs genannten Art in entsprechend ausgebildeten Stationen, wo die Stirnseite der Hülse zugänglich ist, belassen werden. Man kann in der Station den Deckel öffnen und das zu transportierende Gut entnehmen oder einladen. Dies ist oft mit nur einer Hand möglich.

Eine andere Art von dichter Hülse ist aus der AT 394 179 B bekannt. Hier ist der Deckel mittels eines Bajonettverschlusses mit dem oberen Hülsenkopf verbunden, wobei sich zwischen dem Deckel und dem oberen Hülsenkopf eine Dichtung befindet. Nachteilig ist bei dieser Art von Hülse, dass infolge der Dichtung eine relativ hohe Kraft zum Verdrehen des Deckels notwendig ist. Um solch eine Hülse zu öffnen oder zu schließen ist es daher notwendig, die Hülse mit einer Hand fest zu halten und mit der anderen Hand den Deckel zu verdrehen. Auch diese Hülse ist daher umständlich bei der Handhabung.

Es ist Aufgabe der vorliegenden Erfindung, eine Hülse der eingangs genannten Art so weiterzubilden, dass sie dicht verschließbar ist.

Diese Aufgabe wird durch eine Hülse der eingangs genannten Art erfindungsgemäß dadurch gelöst, dass zwischen dem Deckel und dem oberen Hülsenkopf eine Dichtung vorgesehen ist und dass der Haken am Deckel außen, außerhalb der durchgehenden Deckelwand, aber innerhalb der Außenkontur von Deckel und Hülsenkopf in einer entsprechenden Vertiefung der Deckelwand angeordnet ist.

Gemäß der vorliegenden Erfindung ist also der Haken außen vorgesehen und greift von außen in eine entsprechende Ausnehmung des Hülsenkopfes. Auf diese Weise kann die erfindungsgemäße Hülse - im Gegensatz zu der eingangs beschriebenen Hülse - einfach durch eine Dichtung, die zwischen dem Deckel und dem oberen Hülsenkopf vorgesehen ist, abgedichtet werden. Der Haken fixiert den Deckel so gut, dass auch bei den in einer Rohrpostanlage auftretenden hohen Beschleunigungen und Verzögerungen der Deckel niemals vom Hülsenkopf abhebt und somit auch niemals Undichtigkeiten entstehen.

Weiters wird durch die Anordnung des Hakens innerhalb der Außenkontur von Deckel und Hülsenkopf sichergestellt, dass beim Durchfahren verschiedener Geräte (z.B. von Weichen oder Durchlaufstationen) keine unbeabsichtigten Kollisionen entstehen können, durch welche die Hülse während der Fahrt geöffnet werden könnte.

Schließlich ist es zweckmäßig, wenn auch der untere Hülsenkopf einen Deckel aufweist, der analog zu den oben angeführten Merkmalen angeordnet und aufgebaut ist.

Auf diese Weise wird die Bedienerfreundlichkeit erhöht, weil die Hülse an beiden Enden geöffnet werden kann.

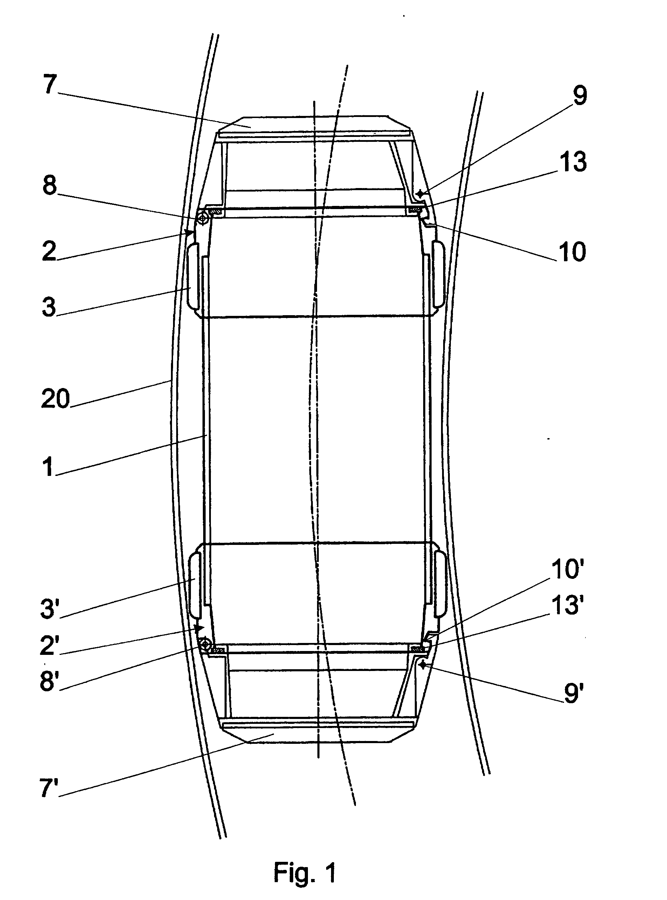

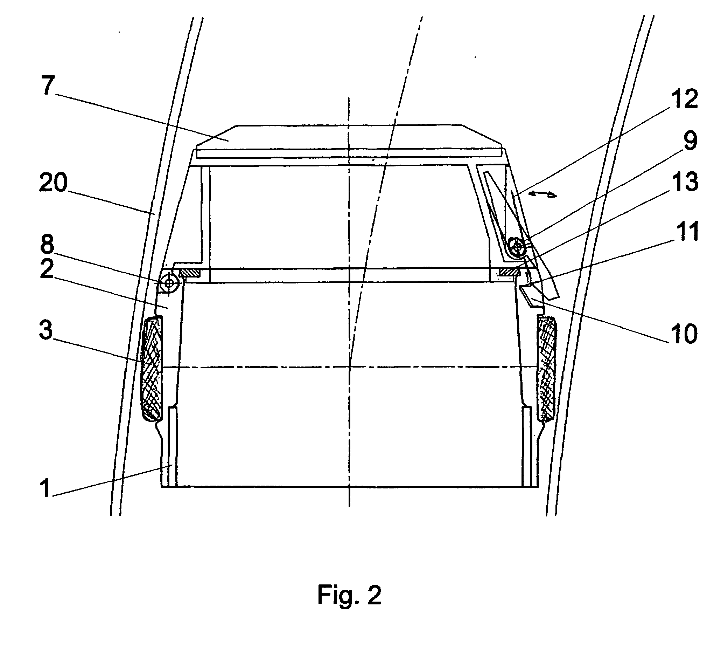

Anhand der beiliegenden Figuren wird die vorliegende Erfindung näher erläutert. Es zeigt: Fig. 1 eine erfindungsgemäße Hülse in einem Fahrrohr; und Fig. 2 den oberen Teil dieser Hülse in größerem Maßstab.

Die erfindungsgemäße Hülse weist ein zylindrisches Hülsenrohr 1 auf, auf das ein oberer Hülsenkopf 2 aufgesetzt ist. Die Verbindung zwischen Hülsenkopf 2 und Hülsenrohr 1 ist flüssigkeitsdicht. In analoger Weise ist am anderen Ende des Hülsenrohres 1 ein unterer Hülsenkopf 2' befestigt.

Auf dem oberen Hülsenkopf 2 ist ein Gleitring 3 angebracht, dessen Außendurchmesser dem Innendurchmesser des Rohres 20, in dem die Hülse laufen soll, entspricht. Der untere Hülsenkopf 2' weist einen analogen Gleitring 3' auf. Die beiden Gleitringe 3, 3' dienen dazu, die Hülse im Rohr 20 zu führen. Die Gleitringe 3, 3' können aus Filz bestehen, oder es kann ein so genannter Rohrpostflansch sein. Bei Letzterem ist auf einer elastischen Unterlage eine Velcro-Auflage, wie sie bei Klettverschlüssen zum Einsatz kommt, aufgebracht. Am oberen Hülsenkopf 2 kann außerdem ein Treibring (nicht dargestellt) vorhanden sein, der im Rohr 20 dichtend anliegt und verhindert, dass Druckluft an der Hülse vorbeiströmt. Die Druckluft steht dann vollständig zum Antrieb der Hülse zur Verfügung.

Der obere Hülsenkopf 2 weist einen Deckel 7 auf, der mit einer Achse 8 am oberen Hülsenkopf 2 angelenkt ist. Die Achse 8 liegt axial zur Hülse und normal zur Hülsenachse, sodass sich der Deckel 7 nach oben aufklappen lässt. Gegenüber der Achse 8 ist am Deckel 7 eine weitere Achse 9 vorgesehen. Sie ist zur Achse 8 parallel. Um diese Achse 9 ist ein Haken 10 schwenkbar angeordnet. Dieser Haken 10 ist durch eine Feder 12 vorgespannt, sodass er in eine Ausnehmung 11 des Hülsenkopfes 2 gedrückt wird. In dieser Stellung ist der Deckel 7 verriegelt. Wird über der Achse 9 auf den Haken 10 mit einem Finger gedrückt, so schwenkt der Haken 10 aus der Ausnehmung 11 heraus und der Deckel 7 kann geöffnet werden. Der gesamte Haken 10 (einschließlich des Abschnittes, der zum Öffnen gedrückt werden muss) ist im Hülsenkopf 2 niveaugleich eingebettet. Das heißt, dass keine Kollision beim Durchfahren von Weichen oder Durchlaufstationen eintreten kann, wodurch sichergestellt ist, dass sich die Hülse während der Fahrt nicht öffnet.

Da der Haken 10 radial an der Außenseite angebracht ist, ist es möglich, an der Innenseite des Hülsenkopfes 2 eine Dichtung 13 einzusetzen. Die Beladungsöffnung wird dadurch nicht verringert.

Auf diese Weise ergibt sich somit eine flüssigkeitsdichte Hülse. Die Hülse ist mit einer Hand zu öffnen und zu schließen, sodass sich auch bei der Handhabung keine Nachteile gegenüber herkömmlichen, nicht flüssigkeitsdichten Hülsen mit aufklappbarem Deckel ergeben. Um die Bedienerfreundlichkeit der Hülse noch zu erhöhen, ist der untere Hülsenkopf 2' genauso ausgebildet wie der oberen Hülsenkopf 2, das heißt auch er hat einen Deckel 7' und einen Haken 10'. Auch alle anderen Elemente sind analog vorhanden; die entsprechenden Bezugszeichen sind jeweils mit einem Strich versehen. Somit kann die Versandhülse an beiden Enden geöffnet werden und es muss beim Absenden der Hülse nicht darauf geachtet werden, welches Ende vorne liegt.

Das Hülsenrohr 1 ist durchsichtig, damit vor dem Öffnen der Hülse festgestellt werden kann, ob etwaige gefährliche Proben (z.B. Blutproben) aus ihren Behältern (Eprouvetten) ausgelaufen sind.

## Patentansprüche

1. Hülse für eine Rohrpostanlage, bestehend aus einem zylindrischen Hülsenrohr (1), einem unteren Hülsenkopf (2') und einem oberen Hülsenkopf (2), wobei der untere und der obere Hülsenkopf (2', 2) jeweils einen Gleitring (3', 3) aufweisen und wobei der obere Hülsenkopf (2) einen Deckel (7) aufweist, der um eine Achse (8), die am Rand der Hülse tangential, normal zur Längsachse der Hülse angeordnet ist, schwenkbar gelagert ist und der gegenüber der Achse (8) einen Haken (10) aufweist, welcher bei geschlossenem Deckel in eine Ausnehmung (11) des oberen Hülsenkopfes (2) eingreift, wobei der obere Hülsenkopf (2) die Ausnehmung (11) außen aufweist, der Haken (10) in Richtung Verriegelungsstellung federbelastet ist und entgegen der Federkraft aus der Ausnehmung (11) ausschwenkbar ist, **dadurch gekennzeichnet, dass** zwischen dem Deckel (7) und dem oberen Hülsenkopf (2) eine Dichtung (13) vorgesehen ist und dass der Haken (10) am Deckel (7) außen, außerhalb der durchgehenden Deckelwand, aber innerhalb der Außenkontur von Deckel (7) und Hülsenkopf (2) in einer entsprechenden Vertiefung der Deckelwand angeordnet ist.

2. Hülse nach Anspruch 1, **dadurch gekennzeichnet, dass** auch der untere Hülsenkopf (2') einen Deckel (7') aufweist, der analog zu den Merkmalen des Anspruchs 1 angeordnet und aufgebaut ist.

## Claims

1. Capsule for a pneumatic post system consisting of a cylindrical capsule tube (1), a lower capsule end (2') and an upper capsule end (2), wherein the lower and the upper capsule end (2', 2) each possess a slip ring (3', 3) and wherein the upper capsule end (2) possesses a lid (7) which is mounted pivotably about an axis (8) arranged tangentially at the edge of the capsule normal to the longitudinal axis of the capsule and which possesses a hook (10) opposite the axis (8), which hook engages in a recess (11) in the upper capsule end (2) when the lid is closed, wherein the upper capsule end (2) has the recess (11) on the outside, and the hook (10) is spring-loaded in the direction of the locking position and can be swivelled out of the recess (11) against the force of the spring, **characterised in that** between the lid (7) and the upper capsule end (2) a seal (13) is provided, and **in that** the hook (10) is arranged on the outside of the lid (7), outside the continuous wall of the lid but within the outer contour of the lid (7) and capsule end (2) in a corresponding depression in the wall of the lid.

2. Capsule according to Claim 1 or 2, **characterised in that** the lower capsule end (2') also possesses a lid (7') which is arranged and constructed analogously to the characteristics of Claim 1.

## Revendications

1. Réceptacle pour système de courrier actionné par pneumatique comprenant un manchon cylindrique (1), une partie d'extrémité inférieure (2') et une partie d'extrémité supérieure (2), réceptacle dont les parties d'extrémité inférieure et supérieure sont chacune munies d'un anneau de glissement (3', 3) et dont la partie d'extrémité supérieure (2) comporte un couvercle (7), articulé autour d'un axe (8) sur le bord du réceptacle, tangent au réceptacle et perpendiculaire à son axe longitudinal, ce couvercle comportant, de l'autre côté par rapport à l'axe (8), un crochet (10) destiné à s'engager, lorsque le couvercle est fermé, dans une cavité (11) formée dans la partie d'extrémité supérieure (2) du réceptacle, la partie d'extrémité supérieure (2) présentant à son extérieur la cavité (11), le crochet (10) étant sollicité élastiquement en direction d'une position de verrouillage et étant susceptible de se dégager de la cavité (11) en pivotant, à l'encontre de la force élastique, **caractérisé en ce qu'**entre le couvercle (7) et la partie d'extrémité supérieure (2) du réceptacle est disposé un joint (13), en **en ce que** le crochet (10) est agencé de façon externe sur le couvercle (7), à l'extérieur de la paroi continue du couvercle mais à l'intérieur du contour extérieur du couvercle (7) et la partie d'extrémité supérieure du réceptacle (2), dans un évidemment correspondant.

2. Réceptacle selon la revendication 1, **caractérisé en ce que** la partie d'extrémité inférieure (2') comporte également un couvercle (7') agencé et réalisé selon les caractéristiques de la revendication 1.
